# EUROPEAN PATENT SPECIFICATION

(11) **EP 2 228 267 B1**
(45) Date of publication and mention of the grant of the patent: **07.08.2013**
(21) Application number: 10155281.8
(22) Date of filing: 03.03.2010
(51) Int. Cl.: B60R 21/08, B60R 21/13, B60J 7/02

(54) **Overhead vehicle occupant restraint system**
Overhead-Rückhaltesystem für Fahrzeuginsassen
Système de retenue de passager d'un véhicule aérien

(30) Priority: 13.03.2009 US 404266
(43) Date of publication of application: 15.09.2010
(73) Proprietor: Ford Global Technologies, LLC, Dearborn, MI 48126 (US)
(72) Inventor: McCoy, Robert William, Ann Arbor, MI 48103 (US)
(74) Representative: Dörfler, Thomas

(56) References cited:
- EP-A9- 1 270 337
- DE-A1- 3 512 117
- JP-A- 55 140 612
- US-A- 5 167 296
- US-A1- 2004 176 893
- US-B1- 6 189 960
- US-B1- 6 520 572

## Description

### TECHNICAL FIELD

The present disclosure relates to a vehicle occupant restraint system and more particularly to a restraint system for use during a vehicle rollover crash.

### BACKGROUND

Vehicle rollover accidents have been identified as a top priority for both research and regulation. It is desirable to mitigate ejections of belted occupants through side windows (in a process called "glazings") during rollover crashes. It is likewise desirable to mitigate ejections through vehicle sun- or moon-roofs.

Various rollover detection methodologies have been developed for activating occupant restraint devices such as air bags, side curtains, safety canopies, seat belt pre-tensioners, and pop-up roll bars. Most methodologies involve monitoring the roll angle and roll velocity of the vehicle, or having various acceleration components with suitable sensors and executing a path control algorithm that deploys certain occupant restraint devices if a rollover becomes probable.

Certain rollover studies have shown that a vehicle may experience various degrees of yaw and lateral slide (e.g., during skidding) prior to rolling over. Such pre-crash vehicle motion can generate forces that influence occupant kinematics prior to a crash event. This movement can happen in less than 100 ms.

Previous solutions for mitigating occupant ejection have focused on preventing partial or full ejection of the occupant through the vehicles side windows. Most have employed a method to deploy an airbag up from the vehicle door across the side windows. For example, some safety canopies utilize side curtain airbags to protect vehicle occupants in side-impact and rollover situations. A safety canopy can deploy from above the sheet metal roof rail between the A-pillar and C-pillar on two-row vehicles, and between the A-pillar and D-pillar on three-row vehicles, to cover side glass areas to protect occupants in outboard seating positions. Inflators for the airbags can be located near the roof rail between the side pillars. The safety canopy may remain inflated for a longer period of time to help prevent injuries from multiple impacts or rollovers.

In JP 55140612 A, which discloses the preamble of claim 1, an automatic closing device for a ceiling window of a car is disclosed. The automatic closing device utilizes an inclination detection means. In the case the car inclines more than a limit angle one of the lead switches of inclination detection means is turned on and via a relay the motor for the ceiling window is started to shut the ceiling window to prevent passengers in the car to be thrown out through an open ceiling window.

US 6 520 572 B1 discloses a method and apparatus for a deployable cover, wherein a cover assembly includes a cover member and a cover displacement mechanism. The cover displacement mechanism positions the deployable cover within about an opening formed in the ceiling of a vehicle. The cover member is made of sealed plastic, rubber, fabric, or similar resilient material and thus retractable and compressible, wherein the cover member is stored-adjacent the opening in a storage housing. If activated the cover member is driven by an actuator and a pulley. US 6 520 572 B1 also discloses an automatic operation of the cover member.

A motor vehicle, especially a passenger motor vehicles is disclosed in DE 35 12 117 A1, wherein a cover member in the ceiling of this vehicle can be automatically closed in dependence with the velocity of the vehicle. If the velocity of the motor vehicle is higher than a predetermined threshold the cover member closes automatically and is also blocked against opening to reduce noise and resistance to vehicular motion and to improve driving safety. If the velocity of the motor vehicle falls below the threshold the cover member in the ceiling is operational again.

US 5 167 296 A discloses a safety device for vehicles, wherein the passenger compartment has at least one closable opening, such as a roof opening and wherein the safety device comprises a sensor system which detects decelerations in the driving speed occurring in the driving direction and activates a closing device. The closing device comprises a closing element which closes an opening of the car if the deceleration exceeds a predetermined value.

A vehicle with a sunroof is disclosed by US 6 189 960 B1, wherein if a rollover of a vehicle body is detected by a rollover detection means, an inflator is operated to inflate an air bag connected to the inflator through a hose. By inflating the air bag with gas ejected from the inflator the sunroof opening portion is closed.

It is desirable to consider customer satisfaction. Customer satisfaction may decrease if safety canopies deploy when a crash or rollover is not imminent. In addition, customer satisfaction may decrease if customers have to replace non-resettable safety restraints when a crash or rollover does not occur. Existing methodologies for deploying occupant restraint systems do not effectively utilize and reset resettable restraint devices such as, for example, overhead vehicle occupant restraint devices.

Therefore, it is desirable to have a vehicle occupant restraint system that reduces occupant ejection from a vehicle sun- or moon-roof. It is further desirable to have a resettable overhead vehicle occupant restraint system that allows the system to deploy in a timely fashion in preparation for crash, while being retractable in the event that crash does not occur.

### SUMMARY

The present invention may address one or more of the above-mentioned issues. Other features and/or advantages may become apparent from the description which follows.

Certain embodiments of the present invention provide an overhead vehicle occupant restraint system, including: a panel configured to deploy and retract with respect to a vehicle roof; an electric motor configured to deploy and/or retract the panel; and a control circuit configured to control deployment of the panel according to a first predetermined condition and to control retraction of the panel according to a second predetermined condition.

Some embodiments of the present invention provide a vehicle, including: a roof with an opening and an occupant restraint device attached to the roof. The occupant restraint device includes: a panel configured to deploy and retract across the opening; and a control circuit configured to govern movement of the panel across the opening according to vehicle conditions.

Some embodiments of the present invention provide a control circuit for use with an overhead vehicle occupant restraint device, the control circuit including: a sensor configured to assess a vehicle condition; and a processor in communication with the sensor, configured to calculate a probability of vehicle rollover crash based upon the vehicle condition. The processor is configured to activate the overhead vehicle occupant restraint device when the probability of vehicle rollover crash is greater than a predetermined amount and to deactivate the overhead vehicle occupant restraint device when the probability of vehicle rollover crash is less than a predetermined amount.

One advantage of the present invention is that it reduces occupant ejections from a vehicle sun- or moon-roof.

Another advantage of the present invention is that it is at least partially resettable, allowing the system to deploy in a timely fashion in preparation for crash, while being retractable in the event that crash does not occur.

In the following description, certain aspects and embodiments will become evident. It should be understood that the invention, in its broadest sense, could be practiced without having one or more features of these aspects and embodiments. It should be understood that these aspects and embodiments are merely exemplary and explanatory and are not restrictive of the invention.

The invention will be explained in greater detail below by way of example with reference to the figures, in which the same references numbers are used in the figures for identical or essentially identical elements. The above features and advantages and other features and advantages of the present invention are readily apparent from the following detailed description of the best modes for carrying out the invention when taken in connection with the accompanying drawings. In the figures:

### BRIEF DESCRIPTION OF THE DRAWINGS

FIG. 1 is a perspective view of an automobile having an overhead vehicle occupant restraint system according to an exemplary embodiment of the present invention.

FIG. 2 illustrates several stages of rollover probability (or severity).

FIG. 3 is an inside view of a vehicle roof with an exemplary overhead vehicle occupant restraint system in a deactivated position or stage.

FIG. 4 is a side view of the vehicle roof of Figure 3 with the overhead vehicle occupant restraint system in an activated position or stage.

FIG. 5 illustrates a control circuit for use with an overhead vehicle occupant restraint system according to an exemplary embodiment.

FIG. 6 is a table showing exemplary input signals that can be used for calculating rollover probability/severity for various pre-rollover and rollover stages.

FIG. 7 illustrates an algorithm for controlling an overhead occupant restraint system in accordance with an exemplary embodiment of the present invention.

FIG. 8 illustrates another algorithm for controlling an overhead vehicle occupant restraint system according to an exemplary embodiment of the present invention.

Although the following detailed description makes reference to illustrative embodiments, many alternatives, modifications, and variations thereof will be apparent to those skilled in the art. Accordingly, it is intended that the claimed subject matter be viewed broadly.

### DETAILED DESCRIPTION

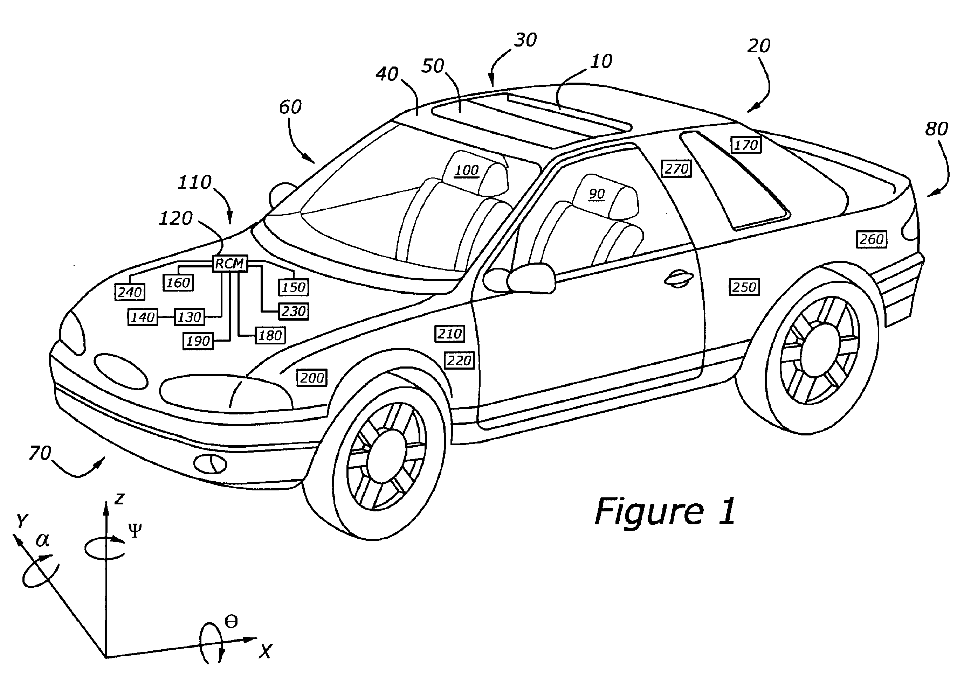

Referring to the drawings, Figures 1-8, wherein like characters represent the same or corresponding parts throughout the several views there are shown exemplary overhead vehicle occupant restraint systems 10, 410 and 540. Systems 10, 410 and 540 can be used in various types of vehicles including small/large cars, coupes, sedans, convertibles, trucks, vans, minivans and SUVs. In some embodiments, an overhead vehicle occupant restraint system (or "OVORS") is included on a vehicle having a sun- or moon-roof. Another recognizable name for the OVORS can be an overhead occupant protection system (or OOPS). The OVORS assists in reducing occupant ejection through a sun- or moon-roof during vehicle rollover crashes.

Various exemplary embodiments in accordance with the present teachings contemplate detecting certain pre-crash motion and activating restraint devices accordingly. In addition, various exemplary embodiments contemplate predicting conditions in which side slip and/or tripping may occur, particularly at a level that makes vehicle rollover more probable. For example, an evaluation of a vehicle's forward energy can be used to predict a rollover incident. Various exemplary embodiments allow occupant restraint systems to deploy in a timely fashion in preparation for crash, while being retractable in the event that crash does not occur.

Referring now to FIG. 1, a perspective view of a vehicle 20 with an exemplary OVORS 10 is shown. Vehicle 20 is a two-door automobile or coupe with an orifice 30 (or opening) in a roof 40 of the vehicle. Roof 40 includes a retractable cover 50 (e.g., a sun- or moon-roof) that selectively extends across the orifice 30 in the roof to enclose a vehicle interior 60 where occupants can be seated. Cover 50 can be manually or electronically controlled. Although the illustrated vehicle 20 is depicted as a small car, vehicle can be any type of transportation device including large cars, sedans, convertibles, trucks, vans, minivans and SUVs.

Vehicle 20 is primarily designed for bi-directional travel with respect to a driving surface. Also shown in FIG. 1 are three axes indicating three directional paths in which vehicle 20 can move. The X-axis relates to longitudinal movement of the vehicle 20, in a direction extending from the front to rear sections of the vehicle (70 and 80 respectively). The Y-axis relates to lateral movements of the vehicle 20, in a direction extending from the driver to passenger side of the vehicle (90 and 100 respectively). The Z-axis relates to vertical movement or displacement of the vehicle 20 with respect to the driving surface. In a rollover crash situation, one or more of the vehicle components can be displaced and/or inverted with respect to the Z-axis. For example, vehicle 20 can rotate with respect to the X-, Y- and/or Z-axes, as shown in FIG. 1. Rotation of the vehicle 20 with respect to the X-axis (or roll) is represented as theta, Θ. Rotation of the vehicle 20 with respect to the Y-axis (or pitch) is shown as alpha, α. Rotation of the vehicle 20 with respect to the Z-axis (or yaw) is shown as psi, ψ. As is discussed below, vehicle can include any number of sensors, such as e.g., a gyroscope, to detect the angular velocity of the vehicle 20 with respect to the X-, Y-and/or Z-axes, i.e., the roll rate, pitch rate and yaw rate, respectively, of the vehicle.

Also illustrated in FIG. 1 is a control circuit 110 for monitoring vehicle conditions and controlling occupant restraint devices. Control circuit 110 includes a restraint control module 120 (or RCM) configured to govern movement of any number of occupant restraint devices/systems. The RCM 120 is in electrical communication with the OVORS 10.

RCM 120, as shown in FIG. 1, executes an algorithm to deploy and/or inflate occupant restraint devices under certain conditions. RCM 120 is configured to determine and/or store thresholds for a number of pre-rollover and rollover stages for occupant restraint devices. Such devices can include an overhead vehicle occupant restraint system, inflatable curtains such as - for example, a safety canopy - a driver side front airbag, a passenger side front airbag, rear side airbags, or a seat belt retractor. RCM 120 is configured to respond to vehicle conditions as inputted from various sensors. Values considered can include a vehicle's center of gravity, weight, width, moments of inertia and/or other suspension characteristics. RCM 120 can be configured to receive inputs as frequently as desired. RCM 120 updates existing thresholds, for example, to reflect any changes in vehicle conditions that might alter a vehicle's propensity to rollover. E.g., inclimate weather conditions may require activation/inflation thresholds to be lowered.

RCM 120 can include any number of microprocessors to execute various deployment/inflation algorithms. RCM 120 can also include electronic hardware to assist in the execution of algorithms. In the illustrated embodiment, RCM 120 is configured to receive and transmit information, through hard-wired and wireless connections, between sensors, occupant restraint devices and/or extra-vehicle systems such as emergency call or automotive repair systems.

In the illustrated embodiment of FIG. 1, RCM 120 is linked to several sensors 130, 140, 150, 160, 170, 180, 190, 200, 210, 220, 230, 240, 250, 260 and 270. Sensors are configured to feed information about vehicle conditions to the RCM 120. Control circuit 110 further includes: a roll rate sensor 130, a roll angle detector 140, a longitudinal accelerometer 150, a side acceleration accelerometer 160, a vertical accelerometer 170, a yaw rate sensor 180, a side slip angle sensor 190, a vehicle speed sensor 200, vehicle weight sensors 210, 220, lateral accelerometers 230, 240, a tire pressure sensor 250, a ride height sensor 260, and an inertia sensor 270. Other sensors that are not illustrated can also be utilized in some embodiments of the invention including, for example, a window status sensor, a seatbelt buckle status sensor, steering wheel sensor, and wheel status sensors.

Those ordinarily skilled in the art will understand that the placement of sensors 130, 140, 150, 160, 170, 180, 190, 200, 210, 220, 230, 240, 250, 260 and 270, shown in FIG. 1 is for illustrative purposes only. The actual placement of such sensors can vary among vehicles or systems. Sensors 130, 140, 150, 160, 170, 180, 190, 200, 210, 220, 230, 240, 250, 260 and 270 can have any orientation with respect to the X-, Y- and Z-axes. Translational sensors (e.g., sensor 230) can be adapted to detect movement along any of the axes. Rotational sensors (e.g., sensor 130) can be adapted to detect the roll, pitch and/or yaw of the vehicle. Sensors can be of any suitable type, e.g., piezoelectric, piezoresistive, solid state, capacitive, or silicon micro-machined devices.

Sensors 130, 140, 150, 160, 170, 180, 190, 200, 210, 220, 230, 240, 250, 260 and 270 can also be used to generate signal inputs for other ancillary algorithms. For example, roll angle and side slip angle data can be sensed and/or can be calculated based on one or more other sensor signals. Similarly, various moment of inertia signals and acceleration signals can be calculated using other signals to determine their values. In some embodiments, data can be calibrated based on other information received by RCM 120.

Sensors 130, 140, 150, 160, 170, 180, 190, 200, 210, 220, 230, 240, 250, 260 and 270 provide input signals to the RCM 120. Input signals can be provided to the RCM 120 wirelessly and/or via a hard-wired connection. Input signals can be provided to RCM 120 via dedicated input lines and/or via a communication bus that shares signals.

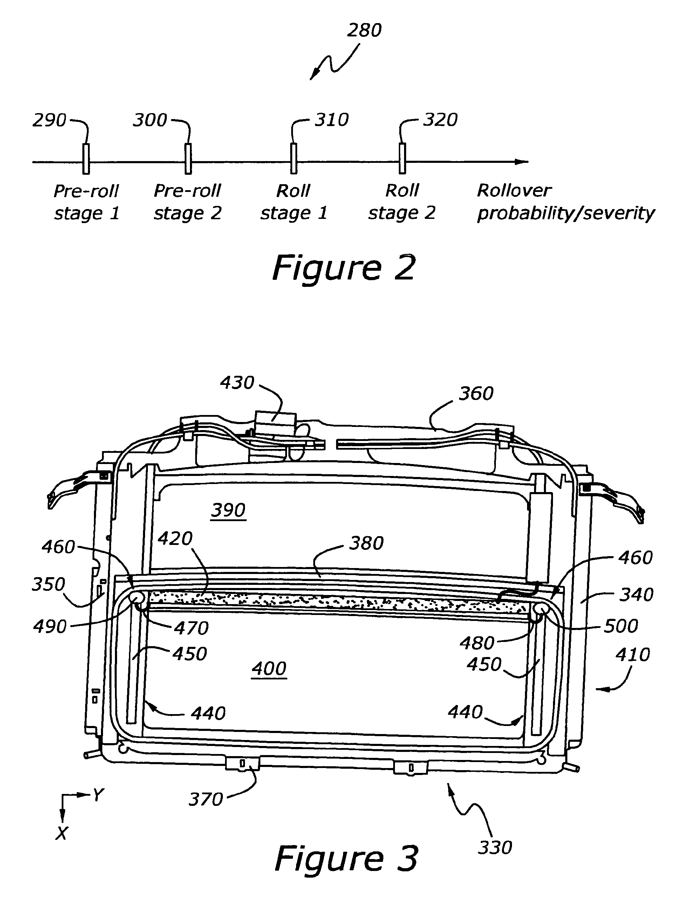

FIG. 2 is an overview 280 of a deployment and/or inflation algorithm for an RCM. An RCM can be configured to calculate a probability of vehicle rollover crash based upon predetermined criteria. There are shown four threshold stages 290, 300, 310 and 320. Two stages 290, 300 represent values of a probability of rollover and two stages 310 and 320 represent severities of a rollover once a rollover is imminent. Rollover becomes more probable and severe as the stages move to the right. Stages 290, 300, 310 and 320 are associated with sensed or calculated values indicative of vehicle conditions. Various occupant restraint devices are activated and/or deployed at different stages. Each stage is predetermined and programmed into the RCM. For example, in one embodiment, an OVORS is deployed/activated at pre-roll stage 2 (300) and is inflated at roll stage 1 (310). In another embodiment, an OVORS is deployed/activated at pre-roll stage 1 (270) and is inflated at roll stage 2 (320). While four stages are shown in FIG. 2, additional or fewer stages and/or thresholds can be set for restraint systems.

Threshold values for the pre-rollover and rollover stages can be dynamic thresholds, static thresholds, or both. For example, thresholds can be based on an angular signal, a speed signal, an acceleration signal, a tire pressure signal, a steering wheel status signal, a roll angle signal, a roll rate signal, a yaw signal, a yaw rate signal, a pitch signal and/or pitch rate signal. A methodology and system can be based on the vehicle undergoing movement or being in a position that indicates a potential for vehicle rollover. Movements or positions that indicate a potential for vehicle rollover can include situations where, for example: a vehicle's trajectory is altered by physical contact with another vehicle or object; the pressure of a vehicle's tire rapidly decreases; a driver rapidly changing steering rates and angles; or when a vehicle leaves the driving surface and experiences vertical accelerations and velocities. Thresholds can additionally depend on one or more data signals indicative of a vehicle collision status including, but not limited to, for example, a window status signal, a seatbelt status signal, and/or a position of a vehicle occupant within the vehicle.

Referring now to FIG. 3 a roof 330 for an automobile is partially shown. The illustrated perspective is from inside a vehicle cabin, looking up towards the roof 330. Roof 330 is located in an overhead section of a vehicle. Roof 330 includes several structural members 340 350, 360, 370 and 380 that are configured to connect with other vehicle structural members (e.g., the A-pillar and B-pillar). Roof 330 includes two large orifices 390 and 400 (or openings). A retractable cover (or sunroof 50), as shown in FIG. 1, can be attached to roof 40 to selectively close orifice 30. In the shown embodiment of FIG. 3, a cover remains over orifice 390 but can be selectively removed from orifice 400. In other embodiments, one or more retractable covers can selectively open multiple large orifices in roof 330.

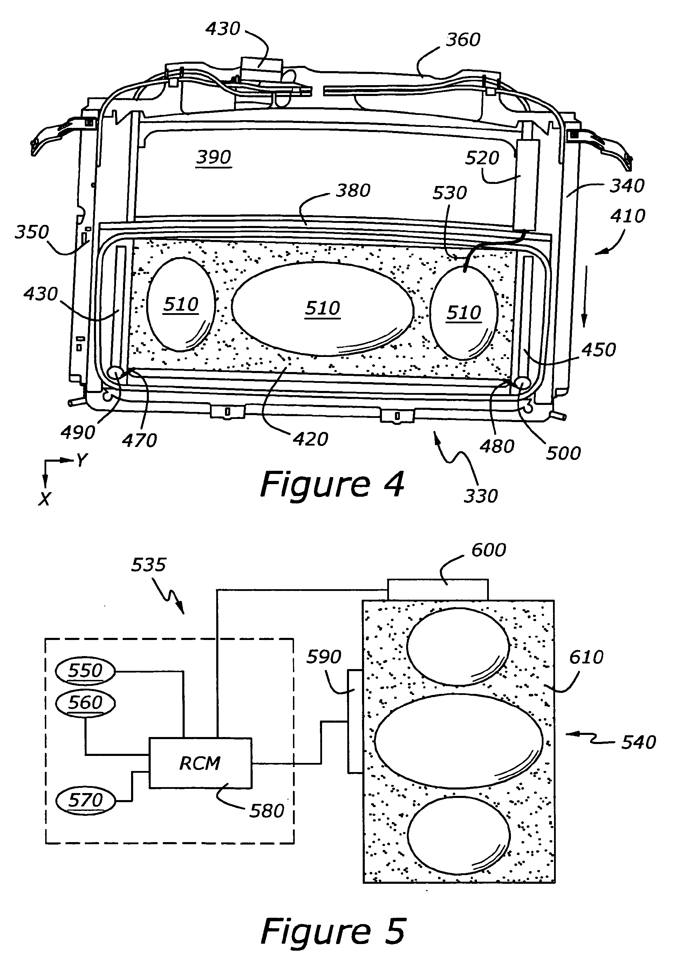

The roof 330 in FIG. 3 includes an overhead vehicle occupant restraint system 410 (or OVORS). The OVORS 410 includes a retractable panel 420 (or cover) shown in the deactivated, stowed or un-deployed position (or stage/state) in FIG. 3. Panel 420 is configured to extend across orifice 400 when in the activated position (as shown and discussed with respect to FIG. 4). With respect to FIG. 3, panel 420 is attached to an electric motor 430. Electric motor 430 powers the panel 420 and moves panel between the deactivated and activated positions. Electric motor 430 acts as an energy source for panel deployment and retraction. Electric motor 430 can be tied into a vehicle's main power system (e.g., an alternator or battery) or electric motor can be separately powered. In one embodiment, electric motor 430 is a sunroof motor used commonly with a sunroof and retractable panel. In the shown embodiment, when panel 420 is not inflated, panel can be moved between the deactivated and activated positions repeatedly. An RCM can be hard-wired or wirelessly connected to electric motor. Electric motor 430 is in electrical communication with a control circuit having an RCM that is configured to instruct the motor to activate and deactivate panel 420 according to vehicle conditions. For example, in one embodiment, RCM instructs the motor 430 to deploy panel 420 when a first predetermined condition is met. The first predetermined condition can be a yaw rate or roll rate in excess of a threshold amount (e.g., 2 degrees per millisecond and 1 degree per millisecond, respectively). First predetermined condition can also be a calculated value, such as a probability of rollover crash (e.g., 25% likelihood of rollover). RCM instructs the motor 430 to retract panel 420 when a second predetermined condition is met. The second predetermined condition can also be a yaw rate or roll rate but one that is less than a threshold amount (e.g., 0.2 degrees per millisecond and 0.1 degrees per millisecond, respectively). Second predetermined condition can also be a calculated value, such as a probability of rollover crash. E.g., RCM can instruct panel 420 to retract where the probability of rollover is calculated to be less than 10% likelihood of rollover. The second predetermined condition can also be whether the vehicle has rolled over. In one embodiment, the rigid body motion of the vehicle can be measured using angular rate sensors, e.g., yaw rate sensor 180 or side slip angle sensor 190 as shown in Figure 1. In this arrangement, the RCM determines whether the vehicle has rolled over by assessing the measured angular rate alone and determining whether it is within a predetermined range. In another embodiment, angular sensors, e.g., a gyroscope, can also be utilized to determine the angular position of the vehicle with respect to a driving surface. Where, for example, the angular position of α is equal to 180 °, the RCM determines that the vehicle has rolled over. In this arrangement, a rollover can be predicted before deformations in the vehicle occur. When a rollover has not occurred the panel 420 can be returned to a stored state. In this manner, panel 420 is retracted and stored when the probability of a crash is reduced.

Panel 420 is linked to a guide rail 440, as shown in FIG. 3. Guide rail 440 includes two tracks 450 (or channels) that are attached to two roof structural members 340 and 350. Tracks 450 extend longitudinally with respect to the vehicle (or in the direction of the X-axis). In the shown embodiment, tracks 450 are configured to extend along orifice 400, however, in other embodiments tracks can extend across multiple orifices (e.g., 390) and/or across the entire roof 330 of the vehicle.

The OVORS 410 includes tension adjusters 460 configured to further guide or adjust the position of the panel 420. The illustrated tension adjusters 460 include tether assemblies that have two tethers 470, 480 (as also shown in FIG. 4) and two tether blocks 490, 500. With reference of FIG. 3, panel 420 is attached to guide rail 450 via tethers. Each tether is attached to one end of the panel 420 and is anchored in tether blocks 490, 500. Tether blocks 490, 500 move along tracks when the panel is deployed. Tether blocks 490, 500 are powered by electric motor 430. The tethers 470, 480 and tether blocks 490, 500 adjust tension in the panel 420. Tethers 470, 480 are composed of a material sufficient to withstand the forces of system deployment and any desired applications. In one embodiment, tethers 470, 480 are composed of a nylon fabric. Other tension adjusters (e.g., springs or additional anchors) can be utilized with panel.

Guide rails 440, as shown in FIG. 3, include locking mechanisms or anchors configured to secure the tether blocks 490, 500 in a predetermined position. Once panel 420 is completely extended across orifice 400 it is secured in place by the locking mechanisms. Locking mechanism can be any type of fastener such as a latch or lever. In one embodiment, a latch is included in the guide rail tracks 450. Latch includes a spring loaded hook so that once the tether block passes a certain point it is locked in place. The latch is configured to selectively disengage the tether block. Latch can be mechanically or electrically actuated. This locking-and-unlocking process can be repeated any number of times. Panel 420 can be repetitively reset between the activated and deactivated positions allowing the OVORS 410 to deploy in a timely fashion in preparation for crash, while being retractable in the event that crash does not occur. Guide rails, tether blocks and locking mechanisms can be composed of any metallic or plastic material. Components can be fastened to the roof via any known fastener, such as rivets, screws, glues or epoxies. Components can be formed using contemporary forming techniques including stamping, casting, injection molding and/or extrusion.

Illustrated in FIG. 4 is the roof 330 of FIG. 3 with OVORS 410 shown in an activated position, stage or state. Panel 420 moves longitudinally with respect to the vehicle or in the direction of the X-axis. Panel 420 is shown in a deployed and locked state. Panel 420 can be constructed of a variety of materials and geometries to satisfy specific vehicle geometries and occupants. In the activated position panel covers orifice 400 (as shown in FIG. 3) to restrict occupants or other items from being ejected from the vehicle. In this manner, OVORS 410 mitigates partial or full ejection of occupants through a vehicle sun or moon-roof.

Panel 420 includes inflatable chambers 510, as also shown in FIG. 4. Inflatable chambers 510 are configured to expand or inflate upon the injection of fluid therein. Chambers 510 can be of any size or shape and can be placed in any desired pattern or configuration. Panel 420 can be or include, for example, an air bag, air curtain or canopy. Chambers 510 are in fluid communication with an inflator 520. A channel 530 or hose is shown facilitating the connection between chambers 510 and inflator 520. Inflator 520 can, for example, be any known gas inflator such as chemically, electrically or mechanically actuated inflators. Since the illustrated OVORS 410 utilizes two separate stored energy sources (i.e., the electric motor 430 to deploy the panel 420 and generate tension, and the inflator 520 to inflate the panel), the amount of complexity and mass of the system can be kept to a minimum. The OVORS 410 presents a simple, lightweight solution that requires a minimal amount of packaging. Tethers 470, 480, locking mechanism and inflation of the chambers 510 ensure sufficient tension is applied across the panel 420 and roof orifice 400.

Inflator 520 is in electrical communication with an RCM. RCM instructs inflator 520 to deliver gas to the chambers 510 in panel when certain vehicle conditions are determined. RCM instructs the inflator 520 to inflate panel when a third predetermined condition is met. The third predetermined condition can be a yaw rate or roll rate in excess of a threshold amount (e.g., 3 degrees per millisecond and 0.5 degrees per millisecond, respectively). Third predetermined condition can also be a calculated value, such as a probability of rollover crash (e.g., 55% likelihood of rollover). In another embodiment, the third predetermined condition is whether the vehicle has rolled over. In one embodiment, the rigid body motion of the vehicle can be measured using angular rate sensors, e.g., yaw rate sensor 180 or side slip angle sensor 190 as shown in Figure 1. In this arrangement, the RCM determines whether the vehicle has rolled over by assessing the measured angular rate alone and determining whether it is within a predetermined range. In another embodiment, angular sensors, e.g., a gyroscope, can also be utilized to determine the angular position of the vehicle with respect to a driving surface. Where, for example, the angular position of Θ is equal to 180°, the RCM determines that the vehicle has rolled over. In this arrangement, a rollover can be predicted before deformations in the vehicle occur. When a rollover has not occurred the panel 420 can be returned to a stored state. In this manner, panel 420 is retracted and stored when the probability of a crash is reduced. In the illustrated embodiment, inflator can be instructed to deliver gas to panel 420 when the panel is in the activated position as shown in FIG. 4. In this embodiment, once inflated, the OVORS 410 cannot be reset or retracted.

Referring now to FIG. 5, there is shown therein a schematic depiction of a control circuit 535 for use with an occupant restraint device 540 (e.g., OVORS). Control circuit 535 includes any number of sensors 550, 560 and 570 to detect various vehicle conditions. Exemplary sensors, as are discussed above, include but are not limited to roll rate sensors, yaw rate sensors, odometers and accelerometers. Sensors 550, 560 and 570 are in electrical communication with a processor 580. Sensors 550, 560 and 570 can be hard-wired or wirelessly linked to the processor 580. Processor 580 is configured to calculate a probability of vehicle rollover crash based upon sensed or calculated vehicle conditions. Various methods can be utilized to calculate a probability of rollover crash. Exemplary methods are disclosed in U.S. Patent No. 7,386,384 titled "System and Method for Predicting a Vehicle Rollover" filed April 08, 2005, which is commonly assigned. Processor 580 is configured to control the occupant restraint device 540 based upon a sensed or calculated value. Processor 580 is configured to activate the OVORS 540 when the probability of vehicle rollover crash is greater than a predetermined amount (e.g., 30% likelihood of rollover) and deactivate the OVORS when the probability of rollover crash is less than a predetermined amount (e.g., 5% likelihood of rollover). In another embodiment, processor 580 is configured to activate or deactivate the OVORS 540 based upon a sensed condition. For example, the system 540 can be activated upon assessing a yaw rate of 3 degrees per millisecond. Processor 580 can be programmed with software and/or hardware controls to execute the activation and deactivation algorithm(s). Processor 580 can be or be included in a restraint control module. RCM can include memory (e.g., RAM or DRAM) to store algorithms. RCM can also include electrical, electro-chemical or electro-mechanical switching devices to actuate the OVORS 540 upon receiving an input signal sensing certain predetermined conditions (e.g., whether the vehicle has rolled over).

The OVORS 540, shown in FIG. 5, includes two energy sources 590, 600. An electric motor 590 is provided to deploy and retract an inflatable panel 610. An inflator 600 is also provided to inflate the panel 610 once it is deployed. Control circuit 535 can include the inflator 600 and electric motor 590. Electric motor 590 is in electrical communication with the processor 580. The processor 580 is configured to instruct or govern the electric motor 590 to activate and/or deactivate the panel 610. In one embodiment, panel 610 is deactivated when in a retracted or stored state and panel is activated when in a deployed state. Control circuit 535 is configured to control the inflator 600. Processor 580 is further in communication with the inflator. Processor 580 is configured to instruct the inflator 600 to release fluid and inflate the panel 610 or OVORS 540. While the elements are shown linked in FIG. 5, communication can be established via hard-wired or wireless communication for any of the components in the control circuit.

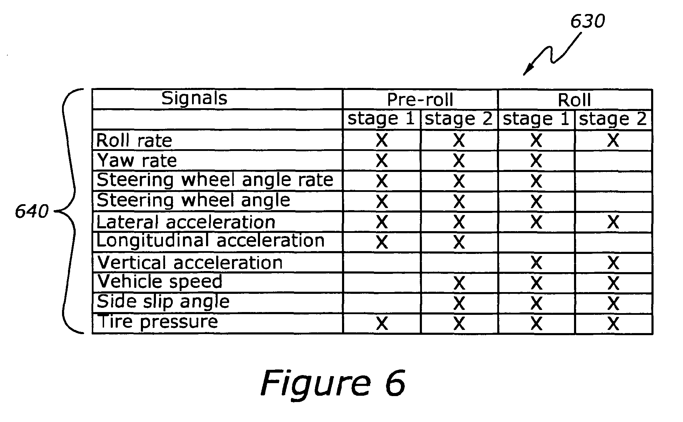

Referring now to FIG. 6 is, a table 630 is illustrated showing how certain vehicle conditions can be used in calculating a probability and/or severity of a vehicle rollover crash for one exemplary restraint system. Thresholds are set for various activation/deployment stages of an occupant restraint system. As shown, different signals are used at different stages to assess a probability or severity of rollover and to determine whether the predetermined thresholds have been met. Four stages are defined as: the pre-rollover stages (pre-roll stage 1 and pre-roll stage 2) and the rollover stages (roll stage 1 and roll stage 2).

Various input signals 640 are received from sensors and utilized to calculate probability/severity of rollover and to compare those values to the pertinent thresholds. The first input signal relates to a vehicle roll rate. Roll rate is defined as the angular velocity of the vehicle with respect to roll (or rotation around the X-axis). A vehicle roll rate is relevant to both roll and pre-roll stages. Vehicle roll rate is used in calculations and comparisons for pre-roll stage 1, pre-roll stage 2, roll stage 1 and roll stage 2.

Yaw rate refers to a vehicle's angular velocity around its vertical axis (or the Z-axis shown in FIG. 1), and is usually expressed in degrees per second or radians per second. Yaw can be described as the movement of an object turning on its vertical axis, and yaw rate sensors typically determine how far off-axis a car is "spinning." A yaw rate signal is used in calculations and comparisons for both pre-rollover stages and the first rollover stage (roll stage 1).

A steering wheel angle and steering wheel angle rate are relevant to calculations and comparisons for both pre-rollover stages and a first rollover stage. Steering wheel angle is indicative of a degree and direction to which the driver wants the vehicle to turn. Since steering wheel angle is indicative of a driver's intended direction, it can be compared to other sensor inputs to determine whether the vehicle is actually heading in the intended direction (or if the driver is under- or over-steering). Steering wheel angle rate indicates how fast the driver is turning the steering wheel, or how fast the steering wheel is turning without the driver's input. The steering wheel angle rate can be indicative of driver actions that can precipitate a rollover or other vehicle position having a potential for vehicle rollover.

Lateral, longitudinal and vertical acceleration or acceleration in the directions of the Y-, X- and Z-axes respectively, as shown in FIG. 1, can also be used in the calculations of rollover probability/severity. Lateral acceleration refers to the rate of increase in speed of a vehicle in a sideways direction. Lateral acceleration can be used in the calculations and comparisons for all four stages. Longitudinal acceleration refers to the rate of increase in speed of a vehicle in a forward or rearward direction. A longitudinal acceleration signal can be used in calculations and comparisons for the pre-rollover stages. Vertical acceleration refers to the rate of increase in speed of a vehicle in a vertical direction. Vertical acceleration is used in the calculations and comparisons for the rollover stages but it is not used in calculations for the pre-roll stages.

In the exemplary embodiment of FIG. 6, vehicle speed is also used to calculate a probability/severity of rollover and compared to the thresholds for pre-roll stage 2 and both of the roll stages. A side slip angle or "slip angle" signal can be used to calculate a probability/severity of rollover and compared to the thresholds for pre-roll stage 2 and both of the roll stages. Slip angle is the angle between a vehicle's actual direction of travel and the direction in which the front of the vehicle is pointed.

One or more tire pressure signals can additionally be used to calculate a probability/severity of rollover and compared to the thresholds for all pre-roll and roll stages. The tire pressure signal(s) can include tire pressure information regarding the right and left front tires and/or the right and left rear tires. The tire pressure reading can be an assessed or calculated value. Tire pressure signal can be a comparative value between multiple tires or related to a condition of a single tire.

Other input signals can be used to determine the thresholds for one or more pre-rollover and rollover stages. For example an initial roll angle detector, vehicle mass sensor, or moment of inertia detector can provide useful information in the calculation of rollover probability and/or severity.

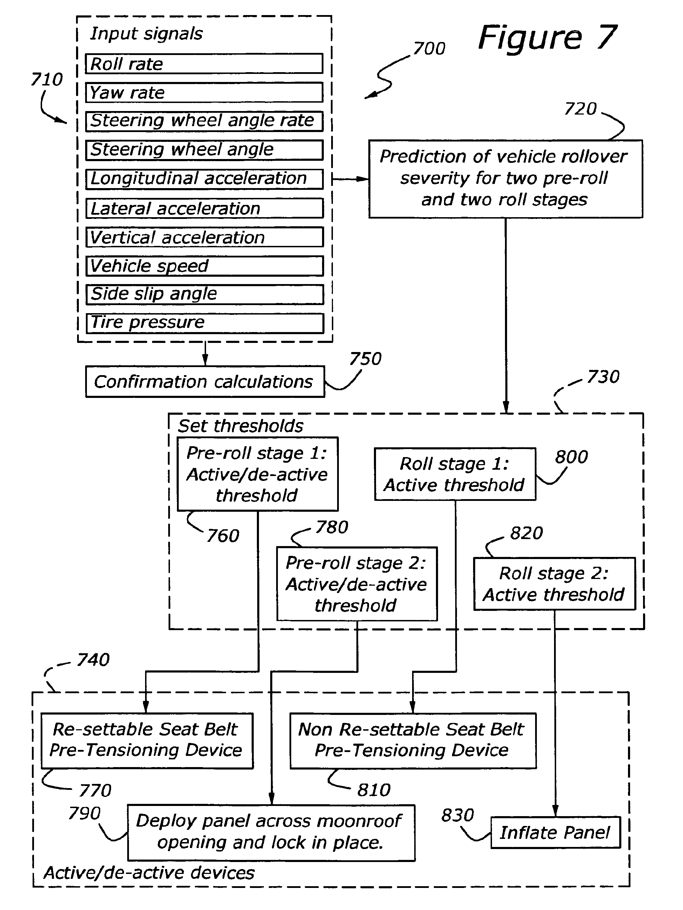

FIG. 7 illustrates an algorithm 700 for controlling multiple occupant restraint systems via an RCM according to another exemplary embodiment. A number of input signals are received at 710, a probability or severity of rollover is calculated at 720, that value is compared to pre-roll and roll stage thresholds at 730, and various restraint systems are activated if the thresholds are met at 740. In the shown embodiment, calculations are confirmed or calibrated at 750.

As illustrated, various input signals are received from vehicle sensors at 710. Input signals include: roll rate, yaw rate, steering wheel angle rate, steering wheel angle, longitudinal acceleration, lateral acceleration, vertical acceleration, vehicle speed, side slip angle, and tire pressure. Signals are used to calculate a probability or severity of vehicle rollover at 720. That value is compared to a number of predetermined thresholds for, in this case, four stages of restraint device activation as shown at step 730.

As shown in FIG. 7, pre-rollover stage 1 threshold 760 is an active/de-active threshold, which means that resettable devices are activated and can later be deactivated. If pre-rollover stage 1 threshold 760 is met re-settable pre-tensioning devices are activated at 770. If, following activation of the re-settable pre-tensioning devices, the probability/severity of rollover falls below the pre-rollover stage 1 threshold re-settable pre-tensioning devices are deactivated and reset. Next, the algorithm compares the probability/severity of rollover with the pre-rollover stage 2 threshold 780, which is also an active/de-active threshold. If pre-rollover stage 2 threshold is met, additional re-settable devices are activated at 790 (e.g., a retractable, un-inflated panel or air canopy across the sunroof, i.e., an OVORS). If, following activation of the additional re-settable devices, the probability/severity of rollover falls below the pre-rollover stage 2 threshold, the resettable devices are deactivated and reset.

The algorithm then checks the rollover stage 1 threshold at 800, which is an active threshold, wherein non-resettable restraint devices are activated or deployed. If the rollover stage 1 threshold is met, non-resettable pre-tensioning devices are activated at 810. If, following activation of the non-resettable pre-tensioning devices, the probability/severity of rollover falls below the roll stage 1 threshold, the non-resettable pre-tensioning devices are not reset. A rollover stage 2 threshold 820 is also an active threshold. If the rollover stage 2 threshold is met, non-resettable occupant containment devices are activated 830 (such as an inflated air canopy). If, following activation of the non-resettable occupant containment devices, the probability/severity of rollover falls below the roll stage 2 threshold, the non-resettable occupant containment devices are not reset.

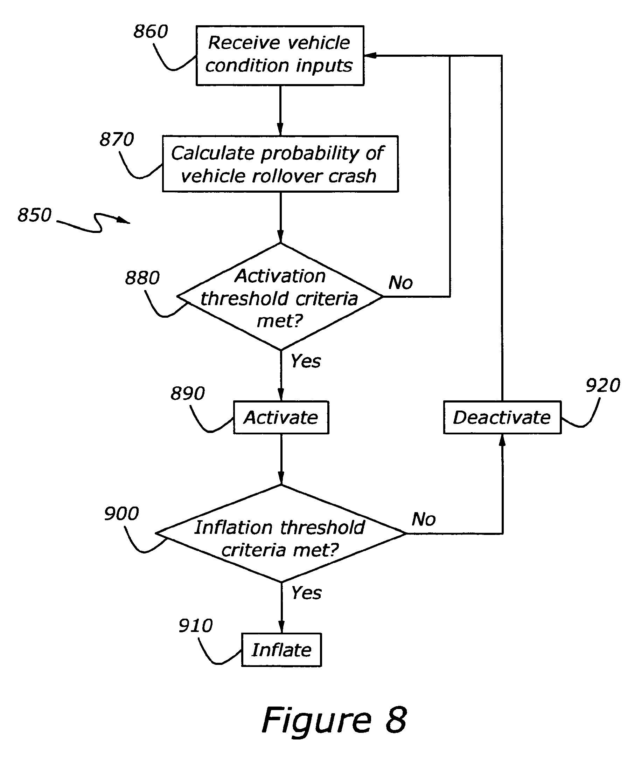

Referring now to FIG. 8, there is shown therein another method 850 or algorithm for controlling an occupant restraint device. The method 850 can be executed via a processor and/or RCM. Method 850 can be compatible with any occupant restraint device, including but not limited to the OVORS discussed herein. Method 850 begins by receiving any number of input signals indicative of vehicle conditions at 860. Signals can be received at any level of frequency. In one embodiment, vehicle conditions are assessed and received every second, in another embodiment, updated vehicle conditions are received every millisecond. At the next step, 870, a probability of vehicle rollover crash is calculated. The probability of rollover can be calculated using any number of input signals. At the next step, 880, the algorithm compares the probability of rollover to a predetermined condition. An activation threshold is programmed into the RCM. If the activation threshold is met the occupant restraint system is activated at 890. If the activation threshold is unmet, the program returns to step 860. Activation can include deployment and/or inflation of an inflatable device (such as an air bag, panel or canopy).

After the occupant restraint system is activated, the algorithm compares the probability of rollover crash to another predetermined condition at 900. An inflation threshold is programmed into the RCM. If the inflation threshold is met the occupant restraint system inflates at 910. In this embodiment, the control loop ends at inflation. If the inflation threshold is unmet, the system is deactivated at 920 and the program returns to step 860. In another embodiment, the program returns to step 880 to assess whether the activation threshold is met. If the activation threshold is met but the inflation threshold is unmet, the system remains activated until the activation threshold is unmet. In this manner the program loops between steps 880 and 900 until either the inflation threshold is met or the activation threshold is unmet.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the written description or claims are approximations that can vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

The various exemplary embodiments provide methods and systems for predicting automobile rollover events and deploying occupant restraint systems. Some embodiments of the present invention can be used in automobiles of various types to predict or determine whether a rollover or crash event will occur or is occurring. Some embodiments can use an algorithm to deploy and/or reset, or activate and de-activate, one or more occupant restraint systems upon predicting (or sensing) a rollover event to a given certainty. The occupant restraint systems can be reset automatically, manually, or both automatically and manually, for example allowing a manual override if automatic resetting is unsuccessful.

One or more of these restraint devices can be used in the various exemplary embodiments of the present teachings and a control circuit can be adapted to activate these restraint devices at the same time or at different times as thresholds are met, e.g., a threshold signifying entry of the vehicle into pre-rollover and rollover stages. Various other sensors and separate controllers can also be used in some embodiments to control the occupant restraint devices. Control circuit can deploy the restraint devices by generating one or more control signals in response to multiple rollover detection thresholds.

It is noted that, as used in this specification and the appended claims, the singular forms "a," "an," and "the," include plural referents unless expressly and unequivocally limited to one referent. Thus, for example, reference to "a restraint device" includes two or more different restraint devices. As used herein, the term "include" and its grammatical variants are intended to be non-limiting, such that recitation of items in a list is not to the exclusion of other like items that can be substituted or added to the listed items.

It will be apparent to those skilled in the art that various modifications and variations can be made to the methodologies of the present disclosure without departing from the scope of its teachings. Other embodiments of the invention will be apparent to those skilled in the art from consideration of the specification and practice of the teachings disclosed herein. It is intended that the specification and examples be considered as exemplary only.

While the best modes for carrying out the invention have been described in detail, those familiar with the art to which this invention relates will recognize various alternative designs and embodiments for practicing the invention within the scope of the appended claims.

## Claims

1. An overhead vehicle occupant restraint system, comprising:
a panel (420) configured to deploy and retract with respect to a vehicle roof (40);
an electric motor (430) configured to deploy
and/or retract the panel; and
a control circuit configured to control deployment of the panel according to a first predetermined condition and to control retraction of the panel according to a second predetermined condition,
**characterized in that**
the control circuit (110) includes a processor configured to calculate a probability of a vehicle rollover crash,
wherein the second predetermined condition is a probability of rollover crash less than a threshold amount.

2. The system of claim 1, wherein the first predetermined condition is a probability of vehicle rollover crash greater than a threshold amount.

3. The system of claim 1, further comprising:
inflatable chambers (510) included in the panel; and
an inflator (520) configured to inflate the chambers.

4. The system of claim 3, wherein the control circuit is configured to control the inflator according to a third predetermined condition.

5. The system of claim 4, wherein the third predetermined condition is a probability of vehicle rollover crash greater than a threshold amount.

6. The system of claim 1, wherein the panel (420) is inflatable and wherein the control circuit is configured to control inflation of the panel according to whether a vehicle has rolled over.

7. The system of claim 1, wherein the second predetermined condition is whether a vehicle has rolled over.

8. The system of claim 1, further comprising:
a sensor connected to the control circuit, configured to determine a yaw rate and/or roll rate of a vehicle.

9. The system of claim 8, where the first predetermined condition is a yaw rate or roll rate greater than a threshold amount.

10. The system of claim 8, where the second predetermined condition is a yaw rate or roll rate less than a threshold amount.

11. The system of claim 1, further comprising:
a guide rail configured to direct the panel at least partially across the vehicle roof.

12. The system of claim 11, further comprising:
a locking mechanism attached to the guide rail, configured to selectively secure the panel.

13. The system of one of the preceding claim, wherein movement of the panel is governed according to the probability of vehicle rollover crash.

## Patentansprüche

1. Overhead-Fahrzeuginsassen-Rückhaltesystem, das Folgendes umfasst:
eine Abdeckung (420), die dazu konfiguriert ist, bezüglich eines Fahrzeugdachs (40) ausgebracht und zurückgezogen zu werden;
einen Elektromotor (430), der dazu konfiguriert ist, die Abdeckung auszubringen und/oder zurückzuziehen; und
eine Steuerschaltung, die dazu konfiguriert ist, das Ausbringen der Abdeckung gemäß einem ersten vorbestimmten Zustand zu steuern und das Zurückziehen der Abdeckung gemäß einem zweiten vorbestimmten Zustand zu steuern,
**dadurch gekennzeichnet, dass**
die Steuerschaltung (110) einen Prozessor enthält, der dazu konfiguriert ist, die Wahrscheinlichkeit eines Fahrzeugüberschlagcrashs zu berechnen,
wobei der zweite vorbestimmte Zustand darin besteht, dass die Wahrscheinlichkeit eines Überschlagcrashs geringer als ein Schwellwert ist.

2. System nach Anspruch 1, wobei der erste vorbestimmte Zustand darin besteht, dass die Wahrscheinlichkeit eines Fahrzeugüberschlagcrashs größer als ein Schwellwert ist.

3. System nach Anspruch 1, das ferner Folgendes umfasst:
aufblasbare Kammern (510), die in der Abdeckung enthalten sind; und
eine Aufblasvorrichtung (520), die zum Aufblasen der Kammern konfiguriert ist.

4. System nach Anspruch 3, wobei die Steuerschaltung dazu konfiguriert ist, die Aufblasvorrichtung gemäß einem dritten vorbestimmten Zustand zu steuern.

5. System nach Anspruch 4, wobei der dritte vorbestimmte Zustand darin besteht, dass die Wahrscheinlichkeit eines Fahrzeugüberschlagcrashs größer als ein vorbestimmter Schwellwert ist.

6. System nach Anspruch 1, wobei die Abdeckung (420) aufblasbar ist und wobei die Steuerschaltung dazu konfiguriert ist, das Aufblasen der Abdeckung in Abhängigkeit davon, ob sich ein Fahrzeug überschlagen hat, zu steuern.

7. System nach Anspruch 1, wobei der zweite vorbestimmte Zustand darin besteht, dass sich ein Fahrzeug überschlagen hat.

8. System nach Anspruch 1, das ferner Folgendes umfasst:
einen Sensor, der mit der Steuerschaltung verbunden ist und dazu konfiguriert ist, eine Gierrate und/oder Wankrate eines Fahrzeugs zu bestimmen.

9. System nach Anspruch 8, wobei der erste vorbestimmte Zustand darin besteht, dass eine Gierrate oder Wankrate größer als ein Schwellwert ist.

10. System nach Anspruch 8, wobei der zweite vorbestimmte Zustand darin besteht, dass eine Gierrate oder Wankrate kleiner als ein Schwellwert ist.

11. System nach Anspruch 1, das ferner Folgendes umfasst:
eine Führungsschiene, die dazu konfiguriert ist, die Abdeckung mindestens teilweise über das Fahrzeugdach hinweg zu leiten.

12. System nach Anspruch 11, das ferner Folgendes umfasst:
einen Verriegelungsmechanismus, der an der Führungsschiene angebracht ist und dazu konfiguriert ist, die Abdeckung gezielt zu sichern.

13. System nach einem der vorhergehenden Ansprüche, wobei die Bewegung der Abdeckung in Abhängigkeit von der Wahrscheinlichkeit eines Fahrzeugüberschlagcrashs gesteuert wird.

## Revendications

1. Système aérien de retenue de passagers d'un véhicule, comprenant :
un panneau (420) configuré pour se déployer et se rétracter par rapport à un toit du véhicule (40) ;
un moteur électrique (430) configuré pour déployer et/ou rétracter le panneau ; et
un circuit de commande configuré pour contrôler le déploiement du panneau en fonction d'un premier état prédéterminé et pour contrôler la rétraction du panneau en fonction d'un deuxième état prédéterminé,
**caractérisé en ce que**
le circuit de commande (110) comporte un processeur configuré pour calculer une probabilité de retournement accidentel du véhicule,
le deuxième état prédéterminé étant une probabilité de retournement accidentel inférieure à une quantité seuil.

2. Système selon la revendication 1, dans lequel le premier état prédéterminé est une probabilité de retournement accidentel du véhicule supérieure à une quantité seuil.

3. Système selon la revendication 1, comprenant en outre :
des chambres gonflables (510) incluses dans le panneau ; et
un gonfleur (520) configuré pour gonfler les chambres.

4. Système selon la revendication 3, dans lequel le circuit de commande est configuré pour contrôler le gonfleur en fonction d'un troisième état prédéterminé.

5. Système selon la revendication 4, dans lequel le troisième état prédéterminé est une probabilité de retournement accidentel du véhicule supérieure à une quantité seuil.

6. Système selon la revendication 1, dans lequel le panneau (420) est gonflable et dans lequel le circuit de commande est configuré pour contrôler le gonflage du panneau selon qu'un véhicule s'est retourné ou non.

7. Système selon la revendication 1, dans lequel le deuxième état prédéterminé est si un véhicule s'est retourné ou non.

8. Système selon la revendication 1, comprenant en outre :
un capteur connecté au circuit de commande, configuré pour déterminer une vitesse de lacet et/ou une vitesse de roulis d'un véhicule.

9. Système selon la revendication 8, dans lequel le premier état prédéterminé est une vitesse de lacet ou une vitesse de roulis supérieure à une quantité seuil.

10. Système selon la revendication 8, dans lequel le deuxième état prédéterminé est une vitesse de lacet ou une vitesse de roulis inférieure à une quantité seuil.

11. Système selon la revendication 1, comprenant en outre :
un rail de guidage configuré pour diriger le panneau au moins en partie en travers du toit du véhicule.

12. Système selon la revendication 11, comprenant en outre :
un mécanisme de verrouillage attaché au rail de guidage, configuré pour fixer le panneau de manière sélective.

13. Système selon l'une quelconque des revendications précédentes, dans lequel le mouvement du panneau est régi en fonction de la probabilité d'un retournement accidentel du véhicule.
